Europäisches Patentamt

European Patent Office

Office européen des brevets

(19)

(11) Numéro de publication : **0 128 907**
**B1**

(12) **FASCICULE DE BREVET EUROPÉEN**

(45) Date de publication du fascicule du brevet :
27.05.87

(21) Numéro de dépôt : 83903777.7

(22) Date de dépôt : 02.12.83

(86) Numéro de dépôt international :
PCT/CH 83/00136

(87) Numéro de publication internationale :
WO/8402462 (05.07.84 Gazette 84/16)

(51) Int. Cl.⁴ : **A 61 G 15/00**

(54) SUPPORT POUR INSTRUMENT DYNAMIQUE, NOTAMMENT DE DENTISTERIE.

(30) Priorité : 22.12.82 CH 7490/82

(43) Date de publication de la demande :
27.12.84 Bulletin 84/52

(45) Mention de la délivrance du brevet :
27.05.87 Bulletin 87/22

(84) Etats contractants désignés :
AT DE FR GB NL SE

(56) Documents cités :
DE-C- 551 456
FR-A- 2 079 787
FR-A- 2 236 476
FR-A- 2 323 086 ·
FR-A- 2 338 032
US-A- 2 650 990

(73) Titulaire : **Mesrouze, Michel**
**21, rue Eugène Delacroix**
**F-94410 Saint-Maurice (FR)**

(72) Inventeur : **Mesrouze, Michel**
**21, rue Eugène Delacroix**
**F-94410 Saint-Maurice (FR)**

(74) Mandataire : **Finck, Dieter et al**
**Patentanwälte v. Füner, Ebbinghaus, Finck Mariahilf-**
**platz 2 & 3**
**D-8000 München 90 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention vise la réalisation d'un support pour instrument dynamique, dentaire en particulier, accouplé de façon amovible à un raccordement ou à un micro-moteur à air ou électrique pourvu d'un encliquetage et constituant l'une des extrémités d'un moyen d'alimentation, formé d'un boîtier comprenant un logement sensiblement cylindrique destiné à recevoir et à retenir tout ou partie dudit raccordement ou micro-moteur.

On utilise, en médecine dentaire notamment, des instruments dynamiques, en particulier des turbines et des pièces à main droites et contre-angles. Ces instruments, qui sont généralement constitués d'un axe porte-outil et d'une tête d'outil doivent être alimentés en air ou en électricité, ce qui nécessite une source d'alimentation et un moyen d'alimentation.

La source d'alimentation en air ou en électricité peut être spéciale, c'est-à-dire indépendante de tout équipement particulier. Elle reste cependant le plus souvent intégrée dans un équipement adéquat.

Quant à lui, le moyen d'alimentation peut consister dans une amenée d'air branchée d'une part à la source d'alimentation spéciale ou intégrée dans l'équipement et comprenant d'autre part, soit à son autre extrémité, un raccordement pourvu d'un encliquetage auquel on peut aisément accoupler soit une turbine, soit un micro-moteur à air. Il peut également consister dans une amenée d'air ou d'électricité branchée d'une part à la source d'alimentation spéciale ou intégrée dans l'équipement et comprenant d'autre part, soit à son autre extrémité, un micro-moteur à air ou électrique pourvu d'un encliquetage auquel on peut aisément accoupler une pièce à main droite ou contre-angle.

Il découle de ce qui précède que le moyen d'alimentation est constitué, à l'une de ses extrémités, soit d'un raccordement, soit d'un micro-moteur à air ou électrique pourvu d'un encliquetage. Ce dernier peut évidemment prendre des formes différentes. Par exemple, dans le raccordement, il peut consister dans deux cliquets symétriques agissant en sens contraire. Par contre, dans le micro-moteur à air ou électrique, il consiste le plus souvent dans un seul cliquet surmonté d'un bouton-poussoir.

L'accouplement entre le raccordement et la turbine ou le micro-moteur à air est assuré par les becs des cliquets qui pénètrent dans une rainure correspondante dans l'axe porte-outil de la turbine ou dans le corps du micro-moteur à air. De même, l'accouplement entre le micro-moteur à air ou électrique et la pièce à main droite ou contre-angle est assuré par le bec du cliquet qui pénètre dans une rainure correspondante dans l'axe porte-outil de la pièce à main.

Le médecin-dentiste est souvent amené à utiliser successivement plusieurs instruments dynamiques différents. S'il dispose d'un équipement élémentaire, soit d'un seul moyen d'alimentation, il est dans l'obligation de procéder à réitérées reprises aux opérations de découplage et d'accouplement de ses instruments. A cet effet, il doit nécessairement avoir recours à ses deux mains, l'une tenant l'instrument, l'autre le moyen d'alimentation et actionnant le ou les organes de commande de l'encliquetage. Il y perd en temps, voire en concentration.

Pour pallier ces inconvénients, on propose aux praticiens des équipements complexes à plusieurs éléments et comprenant donc plusieurs moyens d'alimentation, entre trois et sept en général. A chaque élément ou moyen d'alimentation correspond un instrument différent. Le praticien dispose ainsi d'un choix d'instruments et il peut opter pour l'un ou l'autre d'entre eux sans manipulations particulières, dans les limites cependant des possibilités de l'équipement dont il dispose. Les instruments dont le praticien n'a momentanément pas l'emploi reposent sur des supports prévus à cet effet. Dès qu'il souhaite utiliser un instrument qui ne se trouve pas dans sa palette, le praticien est à nouveau contraint de procéder aux opérations de découplage et d'accouplement. Cette solution des équipements complexes comporte donc des limites. D'autre part, elle est coûteuse. Enfin, elle présente les inconvénients d'une installation peu ou pas mobile et relativement encombrante.

Des équipements pour cabinets dentaires de ce type, montrant les difficultés de manipulation que doit surmonter le praticien dans son travail, sont décrits, par exemple, dans les brevets DE-C-551 456 et US-A-2 650 990.

La présente invention vise à simplifier largement les opérations de découplage et d'accouplement d'un instrument dynamique, dentaire en particulier, à l'extrémité d'un moyen d'alimentation constituée d'un raccordement ou d'un micro-moteur à air ou électrique pourvu d'un encliquetage, soit à sauvegarder les avantages d'un équipement élémentaire pour une palette d'instruments.

Dans ce but, le support selon l'invention est composé d'un boîtier destiné à supporter au moins un instrument dynamique, cet instrument étant couplé de façon amovible, grâce à un encliquetage, à un raccordement ou un micro-moteur constituant l'une des extrémités d'un moyen d'alimentation, le boîtier comprenant par ailleurs un logement sensiblement cylindrique pour retenir le raccordement, ce support étant particulièrement remarquable en ce qu'il comporte en outre un agent de découplage agissant, en réponse à des moyens actionnés par l'utilisateur de l'instrument, sur des organes de commande de l'encliquetage pour découpler l'instrument du raccordement auquel il est relié. De préférence, l'agent de découplage consiste dans un ou plusieurs pistons logés dans un ou plusieurs cylindres correspondants, pratiqués radialement dans le boîtier par rapport au logement et débouchant dans celui-ci, ou bien il consiste dans une .chambre annulaire ou dans une ou plusieurs chambres semi-annulaires, en matière souple, déformables et disposées dans une ou plusieurs saignées correspondantes dans la circonférence du logement ; l'action du ou des pistons et la déformation de la chambre annulaire ou semi-annulaire ou encore des chambres semi-annulaires sont provoquées pneumatiquement. Enfin, le boîtier du support peut former deux blocs indépendants, sensiblement symétriques et susceptibles de déplacements latéraux ou rotatifs de façon à provoquer un accroissement du volume du logement compris dans le boîtier.

Les dessins annexés représentent, à titre d'exemple, quelques formes d'exécution possible de l'invention.

La figure 1 représente une vue de plan partiellement en coupe transversale d'un support dans lequel un raccordement est retenu.

La figure 2 est une vue de face en coupe transversale de la fig. 1.

La figure 3 représente une vue de plan partiellement en coupe transversale du support dans lequel un raccordement est retenu.

La figure 4 est une vue de face en coupe transversale de la fig. 3.

La figure 5 est une vue de plan partiellement en coupe transversale d'un support dans lequel un micro-moteur est retenu.

La figure 6 est une vue de face en coupe transversale de la fig. 5.

La figure 7 est une vue de plan partiellement en coupe transversale d'un support dans lequel un micro-moteur est retenu.

La figure 8 est une vue de face en coupe transversale de la fig. 7.

La figure 9 est une vue de plan partiellement en coupe transversale d'un support dans lequel un raccordement est retenu.

La fig. 10 est une vue en coupe transversale de la fig. 9.

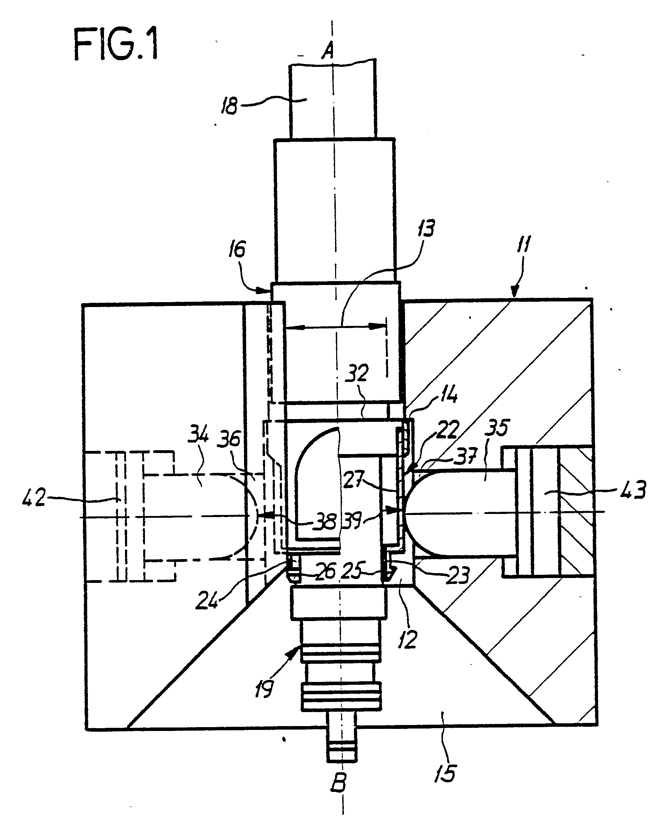

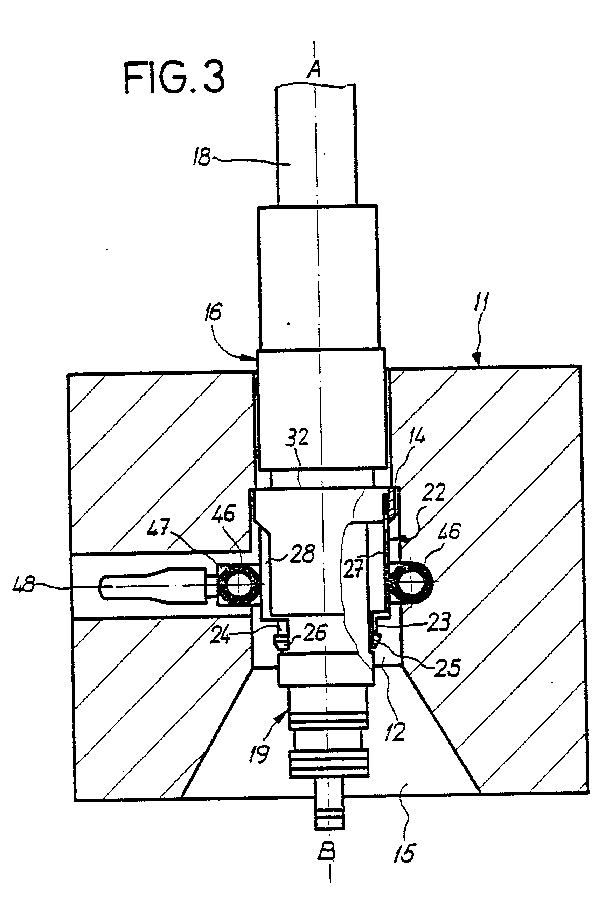

Dans toutes les formes d'exécution représentées, le support a les mêmes caractéristiques générales. Il a l'aspect d'un boîtier 11 de forme quelconque. Le boîtier 11 comprend un logement 12 sensiblement cylindrique qui le traverse de part en part. Le logement 12 peut être totalement intégré dans le boîtier 11 comme dans les fig. 3, 4, 7, 8, 9 et 10 ou peut présenter une ouverture 13 longitudinale sur le sommet du boîtier 11 comme dans les fig. 1, 2, 5 et 6. Il présente également une portée 14 le long de sa circonférence, visible sur les fig. 1, 3, 5, 7 et 9 dont l'utilité sera étudiée plus loin. Enfin, sa base prend une forme évasée, sensiblement conique avant de déboucher sur la face frontale du boîtier 11. Il s'agit du dégagement 15 représenté sur les fig. 1, 3, 5, 7 et 9.

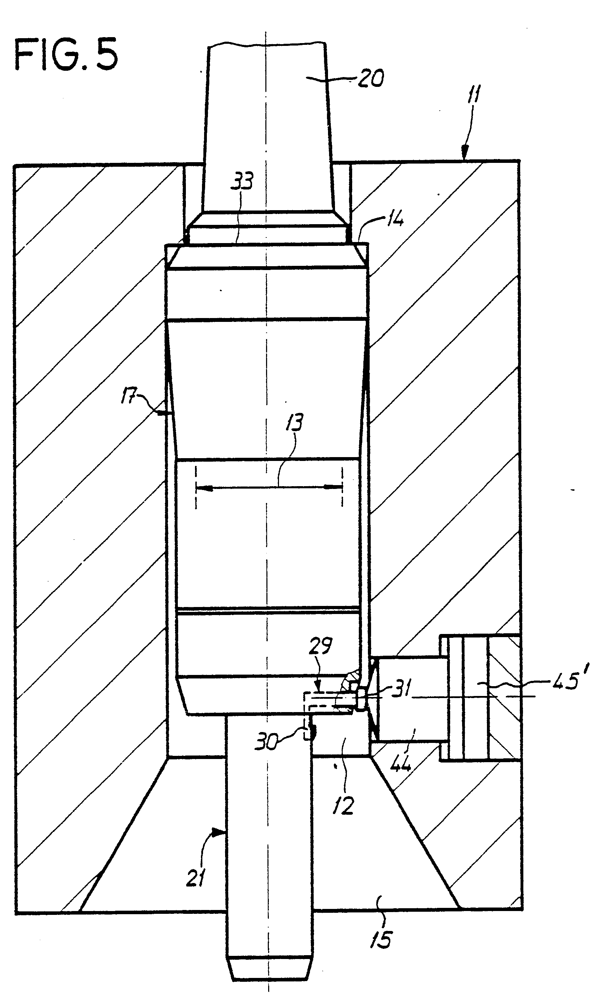

Dans les fig. 1 à 8, le logement 12 a une forme adaptée à celle de l'élément qu'il est destiné à recevoir et à retenir. Cet élément consiste dans un raccordement 16 comme dans les fig. 1 à 4, 9 et 10 ou dans un micro-moteur 17 à air ou électrique comme dans les fig. 5 à 8.

Le raccordement 16 sert d'élément de liaison entre le moyen d'alimentation, en l'occurrence le tuyau 18 d'alimentation en air, à l'une des extrémités à laquelle il est fixé et la turbine ou le micro-moteur à air non représenté qui y est accouplé. L'extrémité postérieure de l'axe porte-outil de la turbine ou celle du corps du micro-moteur à air vient prendre place autour du manchon 19 du raccordement 16.

Le micro-moteur 17 à air ou électrique est fixé à l'une des extrémités d'un moyen d'alimentation, en l'occurrence le tuyau 20 d'alimentation en air ou en électricité. Il sert d'élément propulseur de la pièce à main droite ou contre-angle non représentée qui y est accouplée et également d'élément de liaison entre le tuyau 20 et ladite pièce à main. L'extrémité postérieure de l'axe porte-outil de cette dernière vient prendre place autour du manchon 21 du micro-moteur 17.

Dans les formes d'exécution représentées aux fig. 1 à 4, 9 et 10, le raccordement 16 est pourvu d'un encliquetage 22 composé de deux cliquets 23, 24 symétriques selon l'axe AB du raccordement 16 et agissant en sens contraire. L'encliquetage 22 sert à assurer l'accouplement entre le raccordement 16 et la turbine ou le micro-moteur à air non représenté. En effet, pour procéder à l'opération d'accouplement, on introduit le manchon 19 du raccordement 16 dans l'extrémité postérieure de l'axe porte-outil de la turbine ou dans celle du corps du micro-moteur à air et on presse ces éléments l'un contre l'autre. Sous l'effet de cette pression, les becs 25, 26 des cliquets 23, 24 se rétractent et pénètrent dans une rainure correspondante dans l'axe porte-outil de la turbine ou dans le corps du micro-moteur à air. En pénétrant dans cette rainure, les becs 25, 26 des cliquets 23, 24 reprennent leur position initiale. Pour cela, il faut évidemment qu'au moins une partie du diamètre intérieur de l'extrémité postérieure de l'axe porte-outil de la turbine ou de celle du corps du micro-moteur à air soit légèrement plus petit que le diamètre formé par chacune des extrémités des becs 25, 26 des cliquets 23, 24. Pour découpler la turbine ou le micro-moteur à air du raccordement 16, il suffit de presser sur les organes de commande 27, 28 des cliquets 23, 24.

Dans les formes d'exécution représentées aux fig. 5 à 8, le micro-moteur 17 à air ou électrique est lui-même pourvu d'un encliquetage 29 composé cependant d'un seul cliquet 30. Pour le surplus, l'opération d'accouplement de la pièce à main droite ou contre-angle non représentée au micro-moteur 17 est identique à celle prédécrite. Quant à l'opération de découplage, elle ne diffère de celle dont il est question plus haut qu'en ce qu'il suffit de presser sur le seul bouton-poussoir 31 actionnant le cliquet 30 pour libérer la pièce à main du micro-moteur 17.

Il est évident que pour procéder aux opérations d'accouplement et de découplage décrites ci-dessus, l'utilisateur doit nécessairement recourir à ses deux mains. Le support selon l'invention évite cet inconvénient.

Le logement 12 est destiné à recevoir et à retenir tout ou partie du raccordement 16 auquel une turbine ou un micro-moteur à air est accouplé ou tout ou partie du micro-moteur 17 à air ou électrique auquel une pièce à main droite ou contre-angle est accouplée. La réception est réalisée dès lors que tout ou partie du raccordement 16 ou du micro-moteur 17 qui sont des pièces sensiblement cylindriques est introduit dans le logement 12. Cette introduction a lieu par le dégagement 15 destiné notamment à la faciliter. La rétention est réalisée dès lors que la portée 32 du raccordement 16 ou la portée 33 du micro-moteur 17 préexistante ou prévue à cet effet vient buter contre la portée 14 correspondante du logement 12. Pour le surplus, cette rétention est assurée par le propre poids de l'instrument si l'inclinaison du logement 12 le permet ou par la traction exercée sur le tuyau 18 auquel le raccordement 16 est fixé ou sur le tuyau 20 auquel le micro-moteur 17 est fixé lorsque les tuyaux 18, 20 sont à enrouler. Ces moyens de rétention sont donnés à titre d'exemple. Il en existe d'autres. Ainsi la portée 14 du logement 12 peut être remplacée par un rétrécissement progressif du diamètre du logement 12 et la traction exercée sur les tuyaux 18, 20 peut être due à une potence à laquelle ces tuyaux sont fixés, montée sur un axe, dont le poids entraîne lesdits tuyaux.

Le découplage automatique de la turbine ou du micro-moteur à air du raccordement 16 ainsi que celui de la pièce à main droite ou contre-angle du micro-moteur 17 à air ou électrique est exercée, sur commande, par un agent incorporé au support.

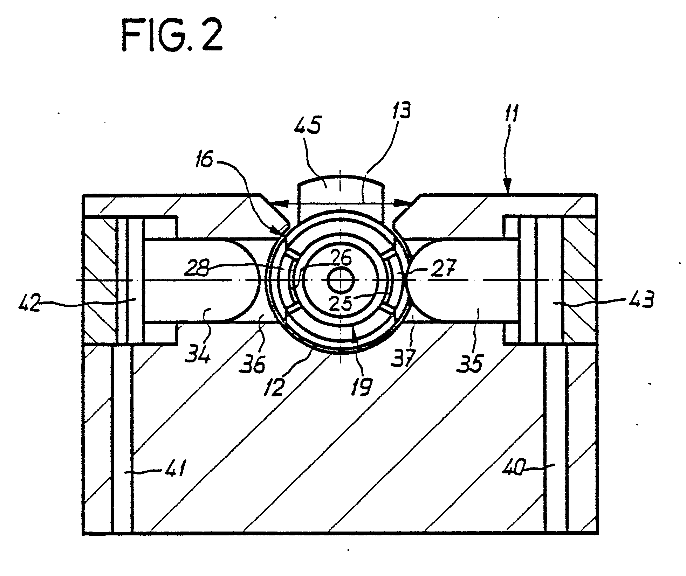

Dans la forme d'exécution présentée aux fig. 1 et 2, l'agent en question consiste dans deux pistons 34, 35 logés dans les cylindres 36, 37 correspondants dans le boîtier 11. Les cylindres 36, 37 sont pratiqués dans le boîtier 11 radialement par rapport à l'axe AB du logement 12 ou du raccordement 16. Cela signifie que les pistons 34, 35 sont destinés à converger. Les cylindres 36, 37 et par voie de conséquence les pistons 34, 35 débouchent dans le logement 12 à la hauteur des organes de commande 27, 28 de l'encliquetage 22. La course des pistons 34, 35 est calculée de telle façon que leur tête 38, 39 finisse par buter contre les organes de commande 27, 28 de l'encliquetage 22 et les presse de façon à provoquer la rétraction des becs 25, 26 des cliquets 23, 24 libérant ainsi la turbine ou le micro-moteur à air ou électrique non représenté du raccordement 16. De préférence, l'action des pistons 34, 35 est provoquée pneumatiquement par une commande au pied. On distingue à la fig. 2 deux conduits 40, 41 prévus à cet effet débouchant dans les chambres 42, 43 formant parties intégrantes des cylindres 36, 37 et situées à l'arrière des pistons 34, 35. Mais l'action des pistons 34, 35 peut être provoquée par tout autre moyen. Il en va de même de leur commande. Pour accoupler à nouveau la turbine ou le micro-moteur à air non représenté au raccordement 16, on procède de la façon déjà décrite mais l'utilisateur ne devra se servir que d'une seule main.

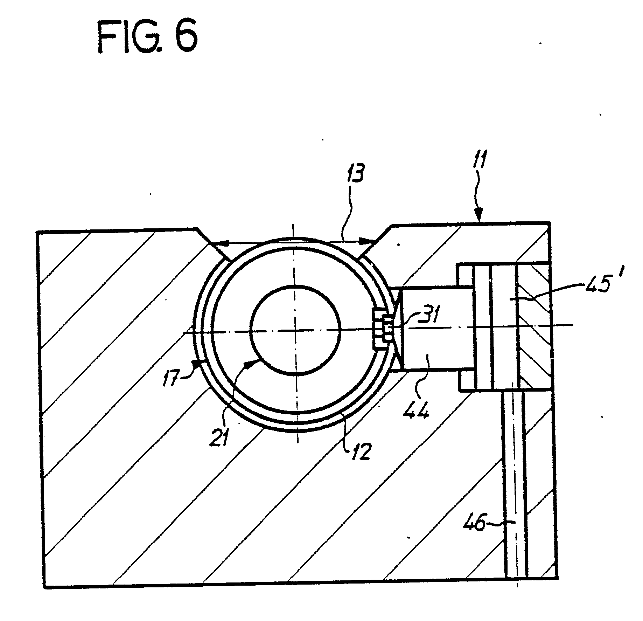

Dans la forme d'exécution illustrée aux fig. 5 et 6, un seul piston 44 est nécessaire puisque l'encliquetage 29 du micro-moteur 17 à air ou électrique est formé d'un cliquet 30 unique. Le piston 44 vient buter contre le bouton-poussoir 31 et le presse de façon à actionner le cliquet 30. Pour le surplus, l'opération de découplage automatique de la pièce à main droite ou contre-angle non représentée du micro-moteur 17 et l'accouplement de ces éléments s'effectuent de la même façon que celle décrite ci-dessus. On distingue aux fig. 5 et 6 une chambre 45' identique aux chambres 42, 43 des fig. 1 et 2 et, à la fig. 6, un conduit 46 identique aux conduits 40, 41 de la fig. 2.

Dans les formes d'exécution prévues aux fig. 1, 2, 5 et 6, l'ouverture 13 sert au passage des tuyaux 18, 20 respectivement qui, totalement libérés du support, rendent l'instrument plus maniable à l'usage. D'autre part, il est nécessaire que les organes de commande 27, 28 de l'encliquetage 22 et le bouton-poussoir 31 de l'encliquetage 29 soient situés bien en face des sorties des pistons 34, 35 et 44 respectivement dans le logement 12. Cela implique le positionnement du raccordement 16 ou du micro-moteur 17 dans le logement 12 qui, par exemple, peut être réalisé par le guide 45 représenté à la fig. 2, fixé au raccordement 16 et destiné à coulisser le long de l'ouverture 13.

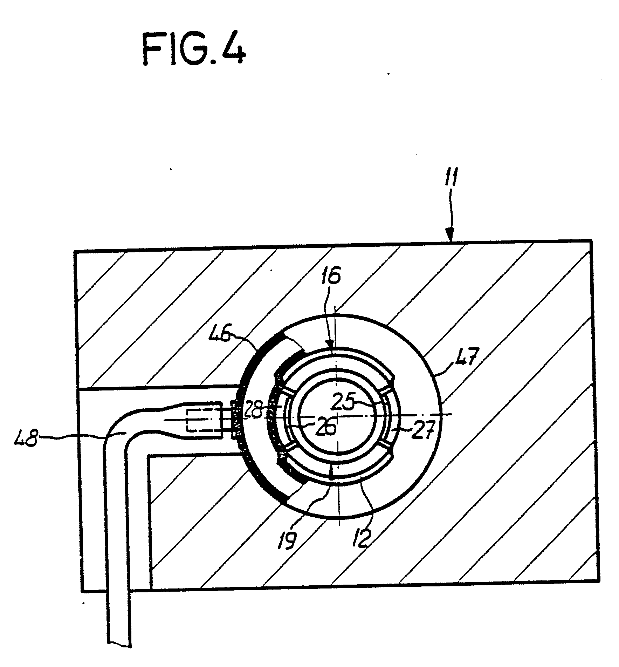

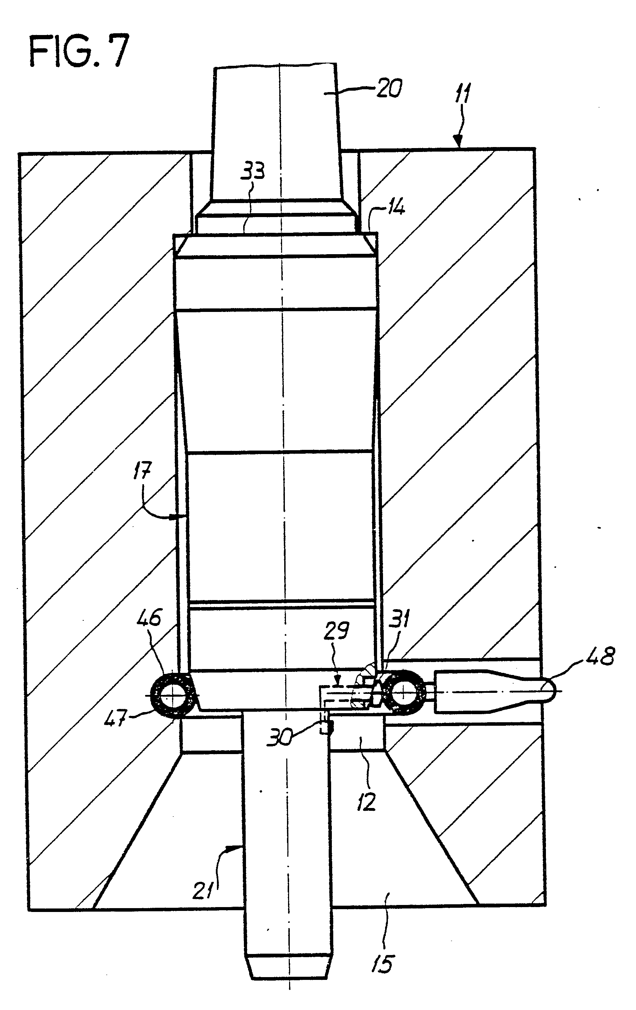

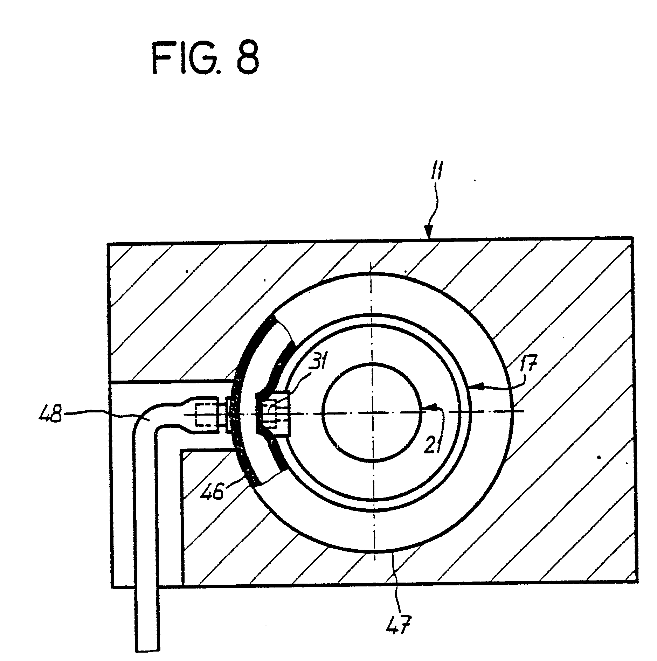

On peut éviter l'obligation de positionnement du raccordement 16 ou du micro-moteur 17 dans le logement 12. C'est l'objet des formes d'exécution présentées aux fig. 3, 4, 7 et 8. Les fig. 3 et 4 concernent le raccordement 16 dont l'encliquetage 22 est formé de deux cliquets 27, 28 tandis que les fig. 7 et 8 concernent le micro-moteur 17 dont l'encliquetage 29 comporte un seul cliquet 30. Ici, le logement 12 est fermé, c'est-à-dire qu'il ne comporte pas d'ouverture longitudinale pour le passage des tuyaux 18, 20 respectivement sur le sommet du boîtier 11. Les tuyaux 18, 20 restent donc prisonniers du logement 12 à l'intérieur duquel ils coulissent. L'agent de découplage automatique consiste dans une chambre annulaire 46 en matière souple et donc déformable. La chambre annulaire 46 est disposée dans une saignée 47 pratiquée dans la circonférence du logement 12 de telle sorte qu'elle entoure le raccordement 16 ou le micro-moteur 17 à la hauteur où sont situés les organes de commande 27, 28 de l'encliquetage 22 ou le bouton-poussoir 31 de l'encliquetage 29. Lorsque l'on insuffle de l'air dans la chambre annulaire 16 par le conduit 48, celle-ci augmente de volume et vient presser contre les organes de commande 27, 28 ou le bouton-poussoir 31.

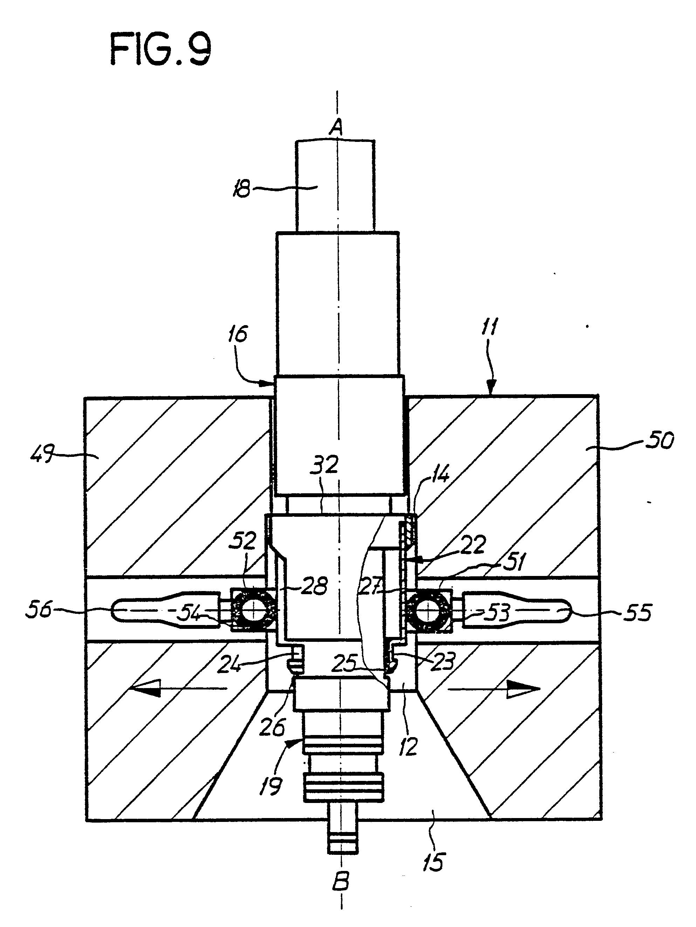

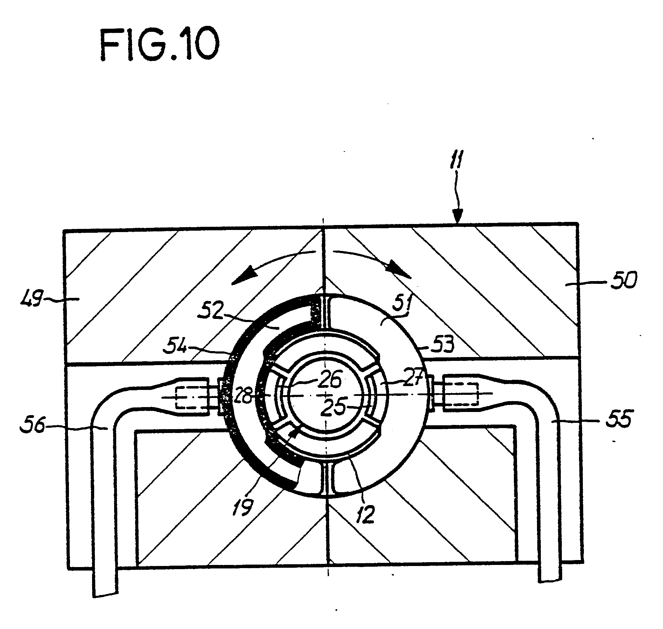

On rétorquera que deux supports sont nécessaires dont l'un comprend un logement 12 susceptible de recevoir un raccordement 16 et l'autre un logement 12 plus grand susceptible de recevoir un micro-moteur 17 puisque ces deux éléments sont d'un diamètre différent. On peut pallier cet inconvénient selon la forme d'exécution illustrée aux fig. 9 et 10. Le boîtier 11 forme deux blocs 49, 50 indépendants et sensiblement symétriques selon l'axe AB de la fig. 9. Les blocs 49, 50 sont susceptibles de déplacements latéraux ou rotatifs selon les flèches représentées aux fig. 9 et 10. Par ces déplacements, on peut augmenter le volume du logement 12 pour le rendre compatible avec celui de l'instrument qu'on lui destine. Chaque partie de logement 12 comporte une chambre semi-annulaire 51, 52 disposée dans une saignée 53, 54 et alimentée par un conduit d'air 55, 56. Les chambres semi-annulaires 51, 52 remplissent la même fonction que la chambre annulaire 46 décrite ci-dessus.

Au nombre des avantages escomptés, il faut citer la mobilité du support et son encombrement réduit, la possibilité de l'adapter à de nombreux instruments dynamiques existants, son prix de revient relativement bas. Le support selon l'invention est idéal pour les pays en voie de développement. Il permet au praticien de sélectionner d'une seule main les instruments dont il a besoin. Enfin, il peut être adapté sur les équipements conventionnels pour faciliter les opérations de découplage et d'accouplement des instruments dynamiques à leur moyen d'alimentation.

**Revendications**

1. Support composé d'un boîtier (11) destiné à supporter au moins un instrument dynamique, dentaire en particulier, ledit instrument étant couplé de façon amovible, au moyen d'un encliquetage (22), à un raccordement (16) ou un micro-moteur (17) à air ou électrique constituant l'une des extrémités d'un moyen d'alimentation, ledit boîtier comprenant par ailleurs un logement (12) sensiblement cylindrique pour retenir ledit raccordement ou micro-moteur, ce support étant caractérisé en ce qu'il comporte en outre un agent de découplage (34, 35, 36, 37) agissant, en réponse à des moyens (40, 41, 42, 43) actionnés par l'utilisateur dudit instrument, sur des organes de commande (27, 28) de l'encliquetage (22) pour découpler ledit instrument du raccordement (16) auquel il est relié.

2. Support pour instrument dynamique selon la revendication 1, caractérisé en ce que l'agent de découplage consiste dans un ou plusieurs pistons (34, 35) logés respectivement dans des cavités cylindriques (36, 37) pratiquées dans le boîtier (11) radialement par rapport au logement (16) et débouchant dans celui-ci.

3. Support pour instrument dynamique selon la revendication 1, caractérisé en ce que l'agent de découplage consiste dans une chambre annulaire (46) ou plusieurs chambres semi-annulaires (51, 52), en matière souple, déformable, disposées dans une ou plusieurs saignées (47, 53, 54) correspondantes dans la circonférence du logement (16).

4. Support pour instrument dynamique selon la revendication 2, caractérisé en ce que le déplacement d'au moins un des pistons (34, 35) dans son logement est produit par des moyens pneumatiques.

5. Support pour instrument dynamique selon la revendication 3, caractérisé en ce que la déformation d'au moins une des chambres (46, 51, 52) est produite par des moyens pneumatiques.

6. Support pour instrument dynamique selon l'une des revendications 1 à 6, caractérisé en ce que le boîtier (11) forme deux blocs indépendants sensiblement symétriques et susceptibles de déplacements latéraux permettant d'accroître le volume du logement (12).

7. Support pour instrument dynamique selon l'une des revendications 1 à 6, caractérisé en ce que le boîtier (11) forme deux blocs indépendants sensiblement symétriques et susceptibles de déplacements rotatifs permettant d'accroître le volume du logement (12).

**Claims**

1. Support consisting of a casing (11) intended to support at least one dynamic instrument, in particular a dental instrument, the said instrument being coupled in detachable fashion by means of a click-stop engaging means (22) to a connection (16) or a micro-motor (17) of the air or electrically operated type constituting one of the ends of the supply means, the said casing comprising furthermore a substantially cylindrical housing (12) for retaining the said connection or micro-motor, the said support being characterised in that it comprises furthermore an uncoupling agent (34, 35, 36, 37) acting in response to means (40, 41, 42, 43) actuated by the user of the said instrument, on means (27, 28) for operating the click-engagement means (22) for uncoupling the said instrument from the connection (16) to which it is connected.

2. Support for dynamic instrument according to Claim 1, characterised in that the disconnecting agent consists of one or a plurality of pistons (34, 35) housed respectively in cylindrical cavities (36, 37) made in the casing (11) radially in relation to the housing (16) and discharging thereinto.

3. Support for dynamic instrument according to Claim 1, characterised in that the disconnecting agent consists of an annular chamber (46) or a plurality of semi-annular chambers (51, 52) of flexible deformable material disposed in one or a plurality of corresponding grooves (47, 53, 54) in the circumference of the housing (16).

4. Support for dynamic instrument according to Claim 2, characterised in that displacement of at least one of the pistons (34, 35) in its housing is produced by pneumatic means.

5. Support for dynamic instrument according to Claim 3, characterised in that the deformation of at least one of the chambers (46, 51, 52) is produced by pneumatic means.

6. Support for dynamic instrument according to one of Claims 1 to 6, characterised in that the casing (11) forms two substantially symmetrical independent units capable of lateral displacements which make it possible to increase the volume of the housing (12).

7. Support for dynamic instrument according to one of Claims 1 to 6, characterised in that the casing (11) forms two substantially symmetrical independent units adapted for rotary displacements making it possible to increase the volume of the housing (12).

**Patentansprüche**

1. Halter bestehend aus einem Gehäuse (11) zum Halten von wenigstens einem dynamischen, insbesondere zahnärztlichen Instrument, wobei besagtes Instrument in lösbarer Weise mittels einer Sperrvorrichtung (22) mit einem Anschluß (16) oder einem mit Luft oder elektrisch betriebenen Kleinstmotor (17) gekoppelt ist, welcher eines der Enden einer Versorgungseinrichtung bildet, wobei besagtes Gehäuse weiterhin eine im wesentlichen zylindrische Aufnahme (12) zur Halterung des besagten Anschlusses oder Kleinstmotors aufweist und besagter Halter dadurch gekennzeichnet ist, daß er außerdem eine Entkopplungseinrichtung (34, 35, 36, 37) aufweist, die ansprechend auf vom Benutzer des besagten Instruments betätigte Einrichtungen (40, 41, 42, 43) auf Organe (27, 28) zum Steuern der Sperrvorrichtung (22) einwirkt, um das besagte Instrument von dem Anschluß (16), mit dem es verbunden ist, abzukoppeln.

2. Halter für ein dynamisches Instrument nach Anspruch 1, dadurch gekennzeichnet, daß die Entkopplungseinrichtung aus einem oder mehreren Kolben (34, 35) besteht, die jeweils in zylindrischen Hohlräumen (36, 37) untergebracht sind, welche in dem Gehäuse (11) radial in bezug auf die Aufnahme (16) und in diese mündend ausgebildet sind.

3. Halter für ein dynamisches Instrument nach Anspruch 1, dadurch gekennzeichnet, daß die Entkopplungseinrichtung aus einer Ringkammer (46) oder mehreren halbkreisförmigen Kammern (51, 52) aus flexiblem, verformbarem Material besteht, welche in einer oder mehreren entsprechenden Nuten (47, 53, 54) in dem Umfang der Aufnahme (16) vorgesehen sind.

4. Halter für ein dynamisches Instrument nach Anspruch 2, dadurch gekennzeichnet, daß die Verschiebung wenigstens eines Kolbens (34, 35) in seiner Aufnahme durch pneumatische Einrichtungen erzeugt wird.

5. Halter für ein dynamisches Instrument nach Anspruch 3, dadurch gekennzeichnet, daß die Verformung wenigstens einer Kammer (46, 51, 52) durch pneumatische Einrichtungen erzeugt wird.

6. Halter für ein dynamisches Instrument nach einem der Ansprüche 1 bis 6, dadurch gekennzeichnet, daß das Gehäuse (11) zwei unabhängige, im wesentlichen symmetrische Einheiten darstellt, die seitlich verschiebbar sind, was eine Vergrößerung des Volumens der Aufnahme (12) ermöglicht.

7. Halter für ein dynamisches Instrument nach einem der Ansprüche 1 bis 6, dadurch gekennzeichnet, daß das Gehäuse (11) zwei unabhängige, im wesentlichen symmetrische Einheiten darstellt, die drehend verschiebbar sind, was eine Vergrößerung des Volumens der Aufnahme (12) ermöglicht.

# FIG.1

# FIG.2

# FIG.3

# FIG.4

# 0 128 907

## FIG. 5

# FIG. 6

## FIG. 7

# FIG. 8

FIG.9

# FIG.10